# EUROPEAN PATENT SPECIFICATION

(11) **EP 0 768 165 B1**
(45) Date of publication and mention of the grant of the patent: **20.03.2002**
(21) Application number: 96114227.0
(22) Date of filing: 05.09.1996
(51) Int. Cl.: B29C 49/56, B29C 33/22, B29C 45/66, B29C 45/32

(54) **Improvement in the apparatus for producing containers made of thermoplastic material**
Verbesserte Vorrichtung zum Herstellen von Behältern aus Kunststoff
Appareil perfectionné pour la fabrication de récipients en matière thermoplastique

(30) Priority: 27.09.1995 IT PN950047
(43) Date of publication of application: 16.04.1997
(73) Proprietor: SIPA S.p.A., I-31029 Vittorio Veneto (IT)
(72) Inventor: De Nardi, Ireneo, 31016 Cordignano, Treviso (IT)
(74) Representative: Giugni, Valter

(56) References cited:
- EP-A- 0 438 721
- EP-A- 0 686 472
- WO-A-91/01870
- DE-A- 1 679 951
- DE-A- 1 916 299
- US-A- 3 484 897
- US-A- 3 880 565
- US-A- 4 560 341

## Description

The present invention refers to an improved apparatus for mass producing containers made of thermoplastic material, particularly polyethylene terephthalate (PET) and polypropylene (PP), for applications involving also their being filled with liquids at an elevated temperature and/or containing CO₂ (carbon dioxide) gas, said apparatus being provided with arrangements that enable the productivity of the moulds to be multiplied during the blow moulding process.

In particular, the present invention proves of very great value when the described arrangements are associated to a preform manufacturing apparatus, commonly known also as single-stage apparatus or system. However, it can prove advantageous also when used in connection with apparatuses that are merely supplied with previously or separately produced preforms and that therefore carry out only the actual blow moulding process (two-stage systems).

In the field of technologies and machines for producing containers of the above cited kind there are a number of developments and improvements aimed at obtaining, on the one side, increasingly robust and improved containers, capable of being used for both hot-filled liquids and carbonated beverages, and, on the other side, production processes and related apparatuses that are capable of manufacturing said containers in an increasingly reliable, cost-effective, versatile manner to increasingly high quality standards in an industrial context of very large-scale-production.

Such production processes are known to be able to be schematically divided into two basic typologies, ie. single-stage and two-stage processes.

In a two-stage process, a preform, or bubble, which has been produced separately in advance, and which is in a substantially amorphous state, is again heated up to its preferred molecular orientation temperature, in correspondence of which it is then blow moulded into its desired shape. As used or referred to in this context, a two-stage process shall in all cases be understood to mean a process producing a preform, or bubble, that must then be heated up again from room temperature to the appropriate temperature for blow moulding purposes.

Single-stage processes are on the contrary called in this way due to the fact that they are capable of producing the so-called preform or bubble, transferring such preform or bubble from the injection or extrusion mould (after allowing it to cool down to any appropriate temperature) to a conditioning station where it levels evenly off at a temperature of preferred molecular orientation. Said preform or bubble is then transferred to a blow-moulding die, where it is moulded into its ultimate, desired shape.

Inherent to any single-stage process there is the fact that an uneven heat distribution is unfailingly brought about in the cross-sectional direction of the wall thickness of the preform when the latter is transferred from the injection or extrusion mould. A number of methods and processes have been patented concerning the cycle times and the temperatures of the preform when this is extracted from the injection mould, in view of optimizing them.

The patent literature covering single-stage processes discloses in all cases a final forming or moulding of the container of thermoplastic material which is in some way or other carried through a conditioning station to reach an even wall temperature throughout the cross-section of the same wall, said temperature corresponding to the preferred molecular orientation temperature of the thermoplastic resin.

Now, all single-stage processes known in the art make unfailingly use of the element provided for producing the plastified resin, ie. the either intermittently or continuously operating injector or extruder, to both transfer said resin in any of a number of appropriate manners into the preform moulds and compress it within said moulds before it cools down to form the desired preform shape.

Among the most significant patents existing in this connection, the patent specification US no. 3,596,315 granted to Shinsuke Yoshikawa may be cited. This discloses an apparatus comprising a single extruder which extrudes in a continuous, tubular manner the preforms that are subsequently cut into individual preforms for insertion along the outer edge of a pair of synchronously rotating carrousels, where said preforms are processed, handled and blow-moulded in view of obtaining the desired ultimate containers.

An improved version of such a process for the continuous production of containers made of PET material is then dealt with in the US patent specification no. 4,242,073 claiming priority from May 13, 1977, granted to Hitachi Shipbuilding & Engineering Co., Ltd., in the sense that it discloses a machine in which a continuous injection process delivers a flow of plastified resin into a central manifold provided with a plurality of feeding arms towards corresponding moulds arranged radially with respect to said central manifold.

Said feeding arms are equipped with appropriate inlet valves to the respective moulds, said valves being synchronized in their operation with the operation of the injector which, after the phase of preparation of the plastified resin, injects that same resin at the desired pressure into said moulds via said central manifold and said feeding arms. After the resin has been in this way injected into a mould, the process is repeated in sequence for the other moulds, wherein all inlet valves to the moulds are appropriately closed with the exception of the ones letting into the mould to be filled next.

Such an invention has then been generally improved and disclosed in the US patent specification no. 4,372,910 and relevant divisional patent no. 4.470.796 granted to Stroup, while the preferred embodiment thereof has been implemented in a single-stage injection-blow moulding machine made by Van Dorn Plastic Machinery as generally disclosed in said patent specification to Stroup.

Such US patent specification no. 4,372,910 (with the relevant divisional patent) substantially describes and claims a process and an apparatus for producing hollow plastic bodies, typically bottles.

As compared to the prior-art solutions, the invention claims a single-stage extrusion process to produce preforms that are subsequently stretch-blow moulded to obtain the finished product. Said process is substantially based on a continuous extrusion process, whose molten material is conveyed to sequentially feed a plurality of preform moulds. The process is organized in such a manner that, when the extruded melt is fed into a mould, for instance the first one of a given series of moulds, the other moulds are shut off by appropriate valves that are operated sequentially. Upon filling the first mould, this is shut off while a second mould is opened to be filled in turn with extruded melt.

This process is repeated until all of the moulds have been filled, after which the sequence is started again from the first mould which has in the meanwhile transferred its preforms onto the respective blow moulding station.

The sequence with which the valves are operated is such that the intake of molten material is practically constant, so that the extrusion process can be carried on in a continuous manner, without interruptions, with obvious operational advantages.

One of the most significant advantages claimed in connection with the invention disclosed in this patent lies in the fact that, since the preform moulding operation is considerably longer than the subsequent blow moulding operation (in many cases it is a multiple thereof), at the end of a blow moulding operation there is no need for a subsequent preform moulding operation to be concluded (which would lead to an inadequate efficiency of the blow moulding station), since through a plurality of preform moulding moulds that are fed in parallel, and a cyclic feeding of a plurality of said multiple preform moulding moulds, which in turn feed in an orderly sequence a plurality of blow moulding stations, a higher utilization level is obtained of the various component parts of the manufacturing system and, therefore, a significant increase in production efficiency.

However, the invention disclosed in said patent has in practice a number of drawbacks that are limiting the extent of the advantages claimed therein:
- the first one among such drawbacks is a consequence of the fact that preform moulds are filled with plastified resin, and the latter is compressed in the mould to produce the preforms, by the action of the same extrusion process. Since the extruder must therefore compress the resin inside the mould, it is required to operate at a rapidly variable pressure, changing from a very low value in the mould filling phase up to a very high value during the compression phase, and this causes the resin to undergo frictioning and, as a result, overheating (leading to the development of acetaldehyde in the particular case of PET resin) as well as a loss in the desired viscosity characteristics and, of course, a loss in energy efficiency due to said frictioning effect.
- The second drawback is due to the evolution pattern of the pressure of the resin inside the mould. As it may be more clearly understood later on, after a mould has been filled and the plastified resin has been duly compressed inside it, the same mould is disconnected from the feeding conduit coming from the extruder; as a result, the pressuree in the mould decreases immediately to a very low value and this occurs exactly in the short period of time during which the preform cools down and solidifies, ie. just in the phase in which a greates possible pressure should actually prevail inside the mould in order to obtain the best possible quality of the moulded product. In other words, a preform is in this way obtained to a quality standard which is certainly not the optimum one and, moreover, is not constant, so that it does not allow for the production of bottles that are adequately strong as necessary to contain highly carbonated liquids.
- A third drawback of the invention disclosed in the afore cited US patent to Stroup arises from the fact that, since the extrusion process is a continuous one that is carried out at a relatively high pressure, each mould is fed with plastified resin at much the same pressure. This means that, for as uniform as possible a quality to be obtained in the various preforms moulded in the various moulds being contemporaneously engaged, it becomes necessary for all of the process parameters to be kept as constant as possible. Among such parameters there is of course included also the consistency of the mould type. In other words, in order to obtain a certain uniformity in the properties of the preforms, all the preform moulds used must practically be identical and this implies that the machine is able to produce just a single type of preforms during any given period. This obviously puts a really heavy penalty in terms of production rigidity in an industrial context that on the contrary requires a same machine to quickly offer the possibility of contemporaneously producing bottles of different characteristics, which must therefore be produced with differing moulds, ie. in a manner that just cannot be implemented in a machine operating according to the afore cited US patent to Stroup.

In order to eliminate at least the drawback connected with the frictioning of the resin, the US patent specification no. 3,819,313 granted to Allied Chemical Corp. proposes a method based on the arrangement of a low-pressure accumulator in parallel with respect to the mould, which is adapted to receive a first charge of molten material from a preparation chamber, so as to store said first charge during the preparation of a second charge in said preparation chamber. When said second charge is duly prepared, both said first charge from the accumulator and said second charge from the preparation chamber are then injected into the mould. Such a configuration is particularly befitting when the injected material is a foamy material that tends to increase its volume, so that it can flow back to partially re-occupy the accumulator.

However, such a solution is totally impracticable in connection with thermoplastic materials that tend to shrink after injection, since in this case there is actually no need for an accumulator to act as a buffer to cope with the increase in the volume of the injected material and, above all, the material of the first charge would cool down during its holding time in the accumulator, and would therefore suffer a loss in the properties that are of primary importance in view of its being able to be easily and effectively injected jointly with material that on the contrary has just been melted and is therefore at a certainly higher temperature.

Moreover, apart from such a limitation, which is by itself fully unacceptable, there would be also the drawback of a low output rate and therefore a poor productivity, since the entire process would be subject to the penalty imposed by the idle time represented by the holding phase in the accumulator, further to the low speed at which the molten material is produced in the preparation chamber.

In order to mitigate the problem represented by the slowness of the moulding process of a thermoplastic resin due to the time required by the same resin to shrink when injected into the mould and during cooling down, the US patent specification no. 3,709,644 granted to Farrell Patent Company discloses a method based on the arrangement of a cylindrical element, with an inner piston sliding in said cylinder, arranged in parallel with respect to the mould and adapted to exert an additional pressure on the fluid resin contained in tyhe mould during the cool-down phase, as well as a valve adapted to separate the plastified-resin injector or extruder element from said mould and compactor during the cool-down phase of the resin in the mould.

Such a solution, however, has following drawbacks:
- the cylinder is filled by suction of the excess resin from the mould filling, such a resin being situated in the delivery conduit to the mould and in said valve: the drawback is due to the fact said resin being taken in into the cylinder is already in a cool-down phase (since such an intake phase is subsequent to the mould filling phase), so that it will be unable to completely fill said cylinder; moreover, when in a subsequent phase said piston is due to re-compress said resin contained in the cylinder, the same resin will already be in a state of advanced cooling, so that the preforms will turn out as being produced with resin in different states, with the ultimate result that preforms of quite poor, unconsistent quality are produced.

b) A further drawback derives from the time that is needed to complete the moulding cycle: although the solution proposed by the above cited patent actually reduces the cycle time, the fact however remains that it is necessary for the time needed to fill the mould and, subsequently, the time needed to compress the resin in said mould to be entirely spent, said times being unavoidably in series to each other.

Going back again to the afore cited US patent specification no. 4,372,910 granted to Van Dorn Company, it is practically impossible to notice that, in a production context requiring productivity to be continuously improved without putting any penalty on the quality of the product, the same patent discloses a method and an apparatus associated with clear productivity limits that are inherent to the same architecture and operational modalities disclosed therein. In fact, if the output rate of such a production system has to be increased, it would be necessary for either the number of preform cavities contained in the moulds or the number of the same moulds to be increased correspondingly. In the first case, however, an increase in the number of the preform cavities would require, for the same cycle time for re-feeding the same mould, a corresponding proportional increase in the flow rate of the resin being fed from the extruder. However, such an increase in the flow rate of the resin delivered by the extruder clashes with the practical-impossibility of finding extruders ensuring the required capacity, unless appropriate extruders are specially developed to this purpose, which however would unavoidably bring about a number of quite heavy economic problems in addition to the technical ones arising from the existence of a large number of conduits to distribute the resin into the preform cavities of the moulds, with the resulting problems connected with the different flowpaths and, therefore, the non-uniform cooling-down of the resin in the various cavities.

In the other case, in which the number of moulds is increased, while leaving unchanged the type of the same moulds, and therefore the number of preform cavities in each one of them, along with the specifications of the extruder, and therefore the output rate of molten resin, the obvious result is that the cycle time would become longer in a proportion with the increase in the number of moulds, considering that, upon elapsing of the time needed by the preforms to solidify in the moulds, these open up to release the preforms and deliver them to the next blow moulding process.

However, if in a precisely calibrated, time-synchronized process the cycle time, ie. the time elapsing from the moment in which a mould is filled through to the moment in which the same mould is filled again in the next "round", corresponds to the time allowed for the preforms to cool down in the mould, then the obvious result is that an increase in the number of moulds and a corresponding extension of the cycle time would leave an idle-time interval between the ejection of the preforms from their respective mould cavities and the next filling of the mould with new resin. Now, such an idle time would have the effect of limiting the utilization rate of the system and, therefore, the overall production efficiency thereof.

The reasons why the process in accordance to the afore cited US patent specification no. 4,372,910 to Van Dorn Company shall actually be seen as having inherent limitations in its overall production performance capabilities, have in this way been fully explained and demonstrated.

Such a situation could actually be improved if the time taken to fill a mould could be reduced to such an extent as to enable the cycle time to be correspondingly shortened and duly synchronized with the waiting time needed for the resin to cool down in the preform cavities of each single mould.

More than that, it clearly appears that the productivity of a process would be greatly increased by a possible reduction in the time needed to fill each single mould. It therefore ensues that, if the mould filling time could be reduced to any significant extent, it would then be possible for a correspondingly large number of mould to be fed within the same, ie. unaltered cycle time, thereby enhancing by a same extent the productivity of the system.

Such an improvement in the mould filling speed has been actually obtained through the use of auxiliary compactor or injector means associated to the individual preform moulds and fed by the central extruder, such means being actually capable of considerably boosting the speed with which such moulds are filled.

This has enabled the number of multiple cavities provided in each mould to be increased correspondingly, thereby bringing about a further improvement in the productivity of the system as far as the production of the preforms is concerned. Such an improvement is however entirely devoided if the downstream portion of the apparatus, ie. the blow moulding part thereof that must further process said preforms into follow bodies, ie. the finished bottles, fails to be adapted in its capacity and output rate to said improved productivity of said portion of the apparatus that produces the preforms.

It would be a quite logical and immediate idea to carry out such a productivity adaptation by increasing by a necessary extent the blow moulding ports that are contemporaneously fed with a cluster or set of preforms coming from a same mould. Such a solution, however,. stumbles over insurmountable limitations of both a constructive and functional nature as described below:
a) first of all, the greater length of the "trains of preforms" would require a corresponding greater length of not only the conditioning stations, but also the actual blow moulding stations, and this would in turn imply an increase in the size and the weight of the entire apparatus, which is already posing considerable transport and handling problems;
b) moreover, the increased number of preforms to be loaded contemporaneouslyin the blow moulding stations would slow down the overall blow moulding phase of the process, ie. would require a correspondingly longer time to complete such a phase, thereby putting another penalty on the possibility of reaching the actual target of a shorter, faster cycle time;
c) the most serious reasons, however, are to be found in the fact that the increased number of blow moulds requires more rapid and powerful pumping stations, and that the increased total pressure generated by the bottles during blow moulding has to be opposed by a correspondingly greater mould clamping pressure. Such a greater pressure, which can be estimated to correspond on an average to a clamping thrust load on the moulds in excess of 100,000 kg, would require a very burdensome, costly oversizing of all mechanical and pneumatic organs that must either generate or withstand such a pressure;
d) furthermore such a huge, moreover pulsating pressure has a negative effect also on the endurance of the moulds themselves, which are contemporaneously subject to a greater pressure and must also withstand it along a greater offset, owing to the larger number of blow moulding ports, and this makes their rigidity more critical, since their tendency to distort outwardly becomes greater, with easily imaginable consequences affecting the blow moulding of the bottles.

From DE 1 679 951 two pairs of mutually coupling mould plates is known, wherein each pair of mould plates is shifted synchronously during the closing and the opening phases.
However said solution shows the drawbacks that:
■ the combination of the possible allowances, and eventually maladjustment due to the tie-rod stretching, may result in the closing of a pair of mould plates while the other pair of counter-moulds is still a little open,
■ as well as the preforms or other objects, inserted for processing, must be placed with the highest precision, that is rarely achievable in a continuous production process due to the interaction of several variables.

From EP 0 438 721 a pair of mutually coupling mould plates, similar to the above cited patent, is known; however an injection moulding machine is described where the clamp power is limited and remarkably lower than the clamp power required by a blowing mould during the blowing phase.
Therefore the two above cited technical solutions cannot be profitably used in a blow moulding machine of plastic preforms.

Owing to all these considerations, it is therefore a main purpose of the present invention to provide the blow moulding stage of an apparatus for the production of hollow bodies, and the operation method thereof, so that its productivity can be increased and adapted to the increased supply of preforms without incurring the afore cited drawbacks, such an apparatus and method can be made easily using readily available techniques and, therefore, are reasonably economic, very reliable and preferably capable of being integrated with a possible upstream stage for the production of the preforms.

Such an aim, along with further features of the present invention, is reached in a blow moulding apparatus according to the claims, in which the successive trains of just conditioned preforms, which may or may not have been moulded in the same mould, since such a condition is not relevant to the purposes of the present invention, are delivered on two distinct, parallel lines of conveyors that contemporaneously feed a so-called "double blow mould", such an apparatus being effective in eliminating all of the afore cited problems connected to an oversizing of the mould, while ensuring an unaltered output rate of the preforms.

The invention may find concrete implementation in certain parts or arrangements of parts, an example of preferred embodiment of which is described below in detail and illustrated with reference to the accompanying drawings, in which:

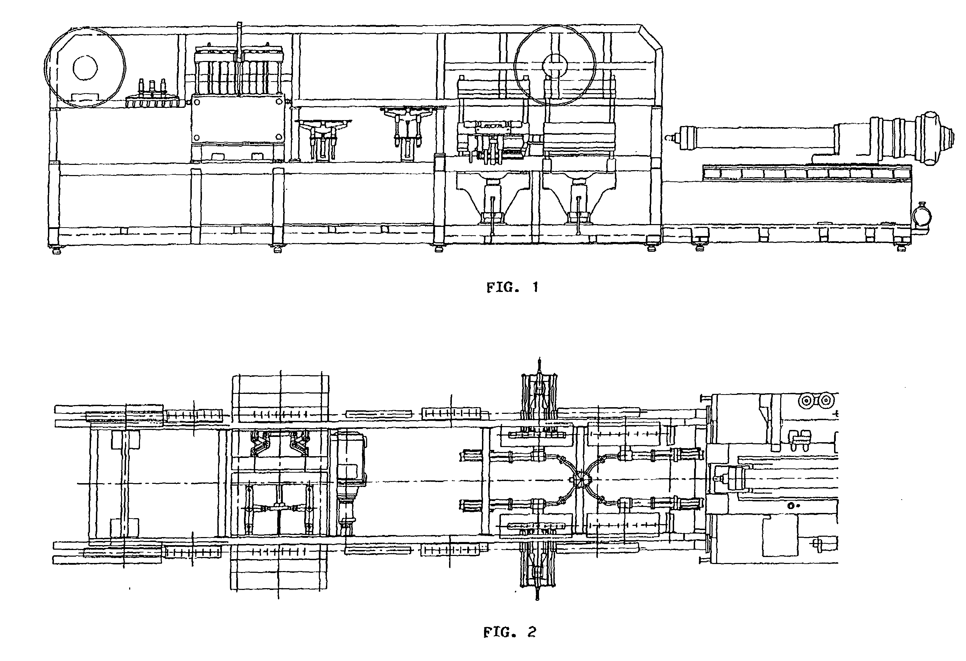

- Figures 1 and 2 are an outer side view and a top view, respectively, of an apparatus according to the state of the art;
- Figure 3 is a simplified vertical side view of an apparatus according to the present invention;
- Figure 4 is an enlarged view of a detail of Figure 3;
- Figures 5 and 6 are top views of another detail of Figure 3, in two distinct operating positions;
- Figures 7 and 8 are top views of a further detail of Figure 3, in two distinct operating positions;
- Figure 9 is a schematical, basic vertical side view of an apparatus according to the present invention;
- Figure 10 is an enlarged view of a detail of Figure 9.

The basic peculiarity of the present invention is the use of a double blow mould arranged slidably on a same bedplate 5 and movable with respect to a reference point 0 situated towards an extremity of said bedplate 5.

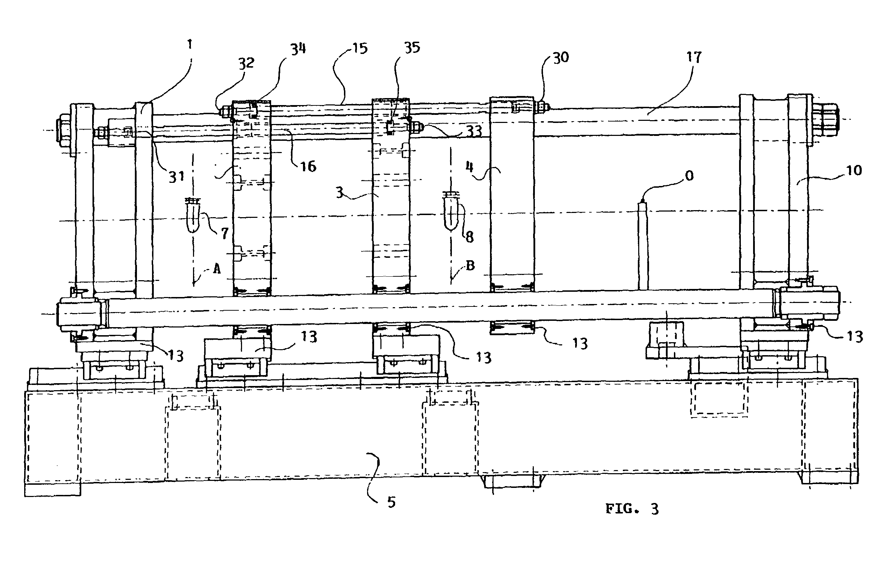

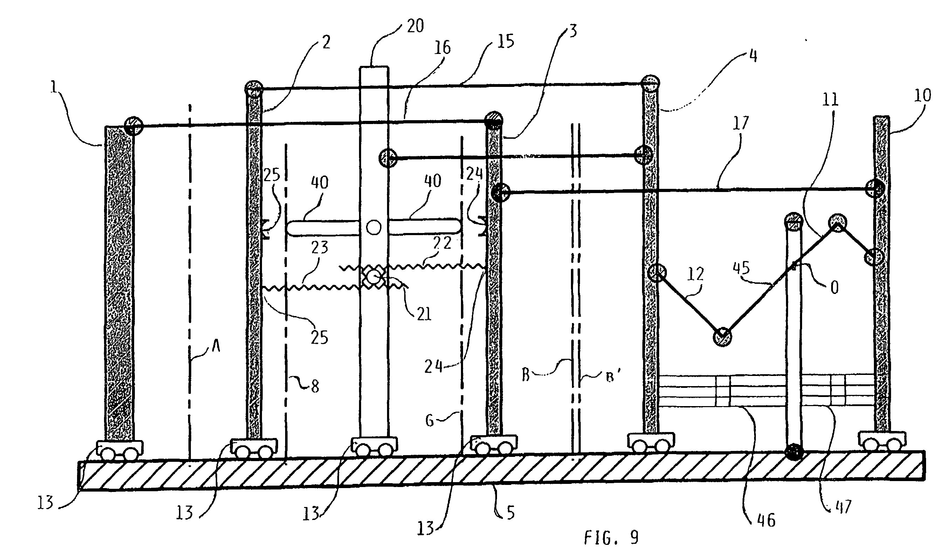

Such a double mould is formed by a pair of moulds, which are arranged at a different distance with respect to said reference point 0 and can more precisely be defined as an outer mould made up by an external mould plate 1 and the corresponding internal mould plate 2, and an inner mould made up by an external mould plate 3 and a corresponding internal mould plate 4. The terms outer/external and inner/internal, as used in connection with both the moulds and the mould plates, refer to their relative position with respect to the other mould or mould plate in relation to said point of reference 0, as it may be clearly inferred from the illustrations in Figures 3 and 9.

Let us now define two reference or contact planes A, B for the outer mould and the inner mould, respectively, on which the corresponding faces of each mould plate close against each other.

Let us also consider that the apparatus is provided with means capable of closing and opening the two moulds in such a manner that:
- the two moulds close and open at the same time (although a different speed in carrying out the related movements can be accepted);
- each mould is capable of accomodating a single train of preforms that have been produced previously, either immediately before in a single-stage apparatus or even a long time in advance in a two-stage apparatus, wherein a train of preforms shall be intended to mean a group or cluster of successively arranged preforms moving in a synchronized manner.

Such a share-out of the whole production of preforms into a sequence of distinct trains 7, 8 of preforms that are handled by respective transport and conditioning means, enables the various blow moulds to be supplied contemporaneously with said preform trains, as this is shown symbolically in Figures 3 and 9 illustrating the moment in which said distinct preform trains are introduced in the two different open moulds.

The preform moulding, conditioning and transport operations, as well as the blow moulding process, are operations that are largely known in the art, or anyway easily implemented by those skilled in the art, so that they will not be described any further.

Therefore, by reducing the length of and, as a result, the number of preforms in each train, it will be possible to use moulds of a type which is substantially similar to the one used in the current art and, as a result, it will also be possible to considerably increase the productivity of the whole apparatus.

The use of individual moulds, however, poses some serious constructive problems that are substantially due to the fact that the hydraulic-mechanical organs used to drive the mould plates must practically be duplicated, with clearly appreciable economic burdens and serious technical problems in connection with the need for such complicated, heavy organs to be accomodated in a space that was originally intended to accomodate just a single mould. Problems additionally arise also from the need for the operation of said pairs of moulds to be synchronized in a perfect manner, since idle or waiting times would otherwise occur therebetween, with the result of a certain loss in efficiency, which is exactly the opposite of what the present invention is actually aiming at.

However, all these problems are solved by some radical improvements that are described below.

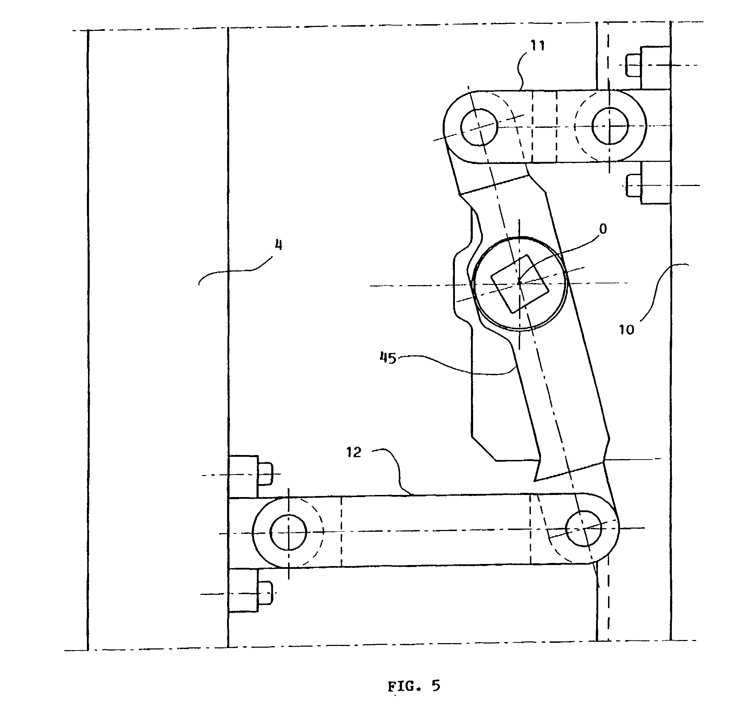

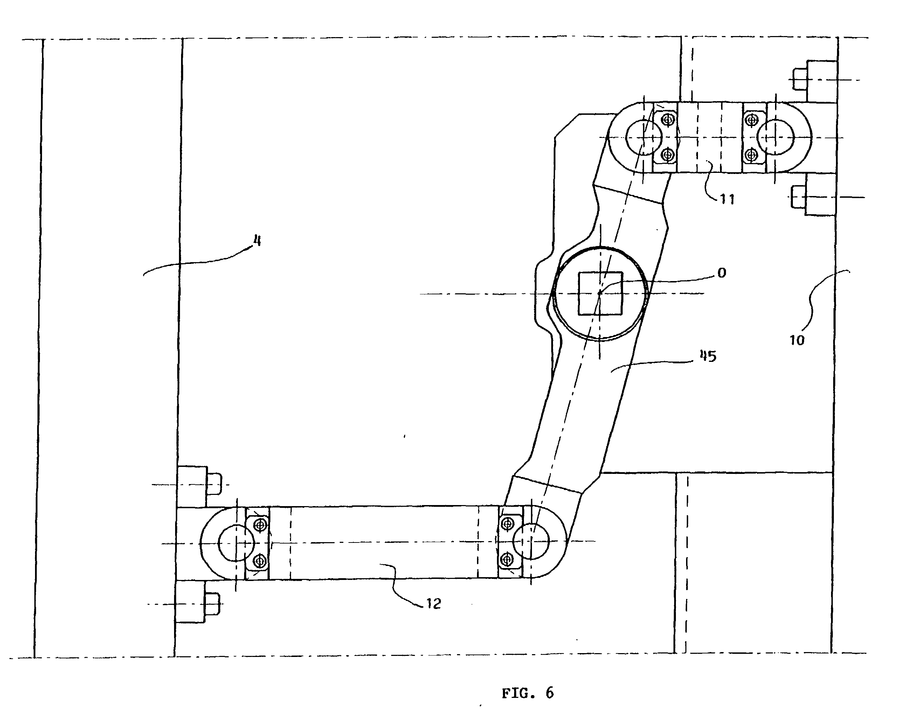

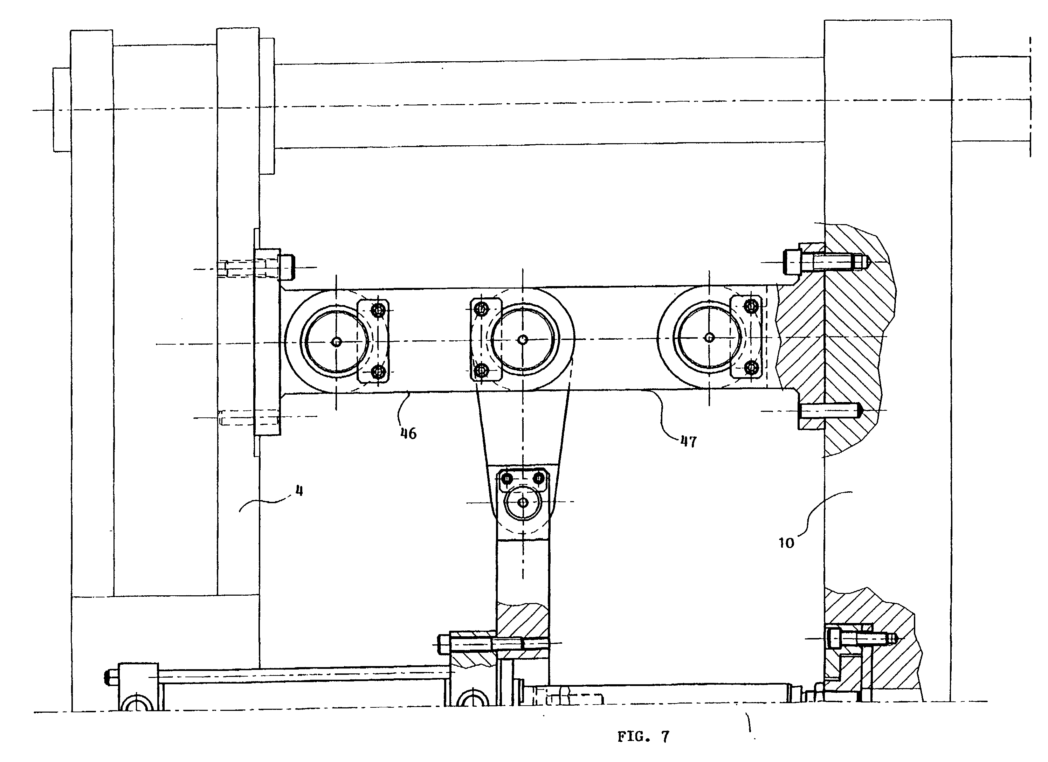

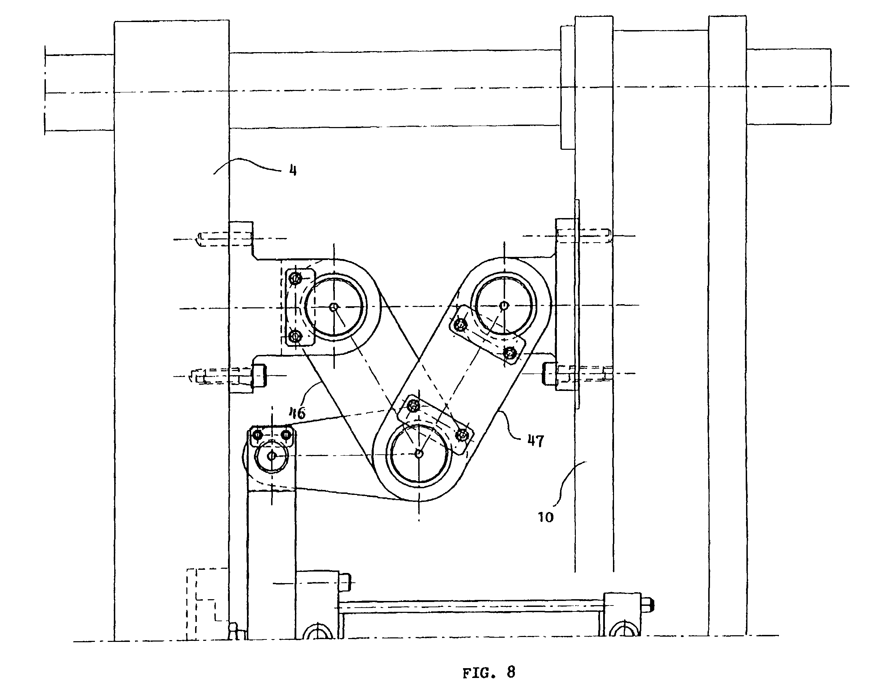

With reference to Figures 3 and 9, let us now notice how a drive platen 10 is arranged on the same bedplate 5 on which the four mould plates 1, 2, 3 and 4, as well as the reference point 0, are resting. The configuration and arrangement of the mould plates are particularly well illustrated in Figure 3, in which it can be noticed that:
- the inner mould plate 2 of the outer mould is connected, by means of at least a rigid tie-rod 15, with the inner mould plate 4 of the inner mould, while the outer mould plate 1 of the outer mould is connected, by means of at least a rigid tie-rod 16, with the outer mould plate 3 of the inner mould and also, through the rigid connection 17, the drive platen 10;
- said mould plates and said drive platen are parallel to each other and are adapted to slide unidirectionally in the two opposite directions with respect to the bedplate to which they are connected at their lower portion by means of appropriate slide-type engaging means 13;
- the sliding direction of the mould plates and the drive platen is orthogonal to the reference or contact planes A, B;
- a synchronizing lever 11 is provided between said fixed reference point 0 located on the bedplate 5 and said drive platen 10, while a similar, but not identical synchronizing lever 12 is arranged between said fixed reference point 0 and the inner mould plate 4 of the inner mould (Figures 5, 6). Said levers, which are actually motion balancing levers, have the intermediate lever 45 in common which engages the fixed reference point 0 and rotates thereabout, said levers being sized, connected and arranged, along with their common intermediate lever 45, so as to be capable of both defining the initial position (open moulds) of the inner mould plate 4, and therefore also of the inner mould plate 2, as well as the two outer mould plates 1 and 3 through the drive platen 10, and controlling in a synchronous manner and with the desired speed the movement of all said mould plates;
- furthermore, between the fixed reference point 0 and the inner mould plate 4 and the drive platen 10, respectively, there are provided respective power mechanisms 46, 47, typically lever-type organs, made in such a manner that, when appropriately driven, preferably through hydraulic means, they are capable of synchronically pushing or pulling the drive platen 10 and the inner mould plate 4 (Figures 7, 8).

For reasons of greater convenience, the association of the mechanisms 46 and 47 will be shortly designated with the conventional, generally known denomination of "toggle assembly" in the following.

With such a particular architecture, it just takes the actuation of the toggle assembly alone to operate the inner mould plate 4 and, through the latter via the connection 15, also the inner mould plate 2 of the outer mould, as well as to operate the drive platen 10 and, therefore, also the two outer mould plates 1 and 3.

The practical consequence of the above is that, through an appropriate arrangement and sizing of the various organs involved, such as for instance with both mould plates open and symmetrically spaced apart from the respective contact planes A, B, and the toggle assembly in its fully closed condition, in the initial position, it is possible for the two distinct trains of preforms to be introduced contemporaneously in the two just defined moulds, the phase including the clamping of such moulds, the blow moulding operation, the opening of the same moulds and the removal of the blow-moulded hollow bodies being capable of being carried out in a substantially traditional manner thereupon.

It can therefore be conclusively said that the desired result is obtained in this way of controlling and driving in a fully synchronous manner the opening and thew closing, or clamping, of both blow moulds through the use of a single driving mechanism (toggle, tie-rods, drive platen).

However, the above described constructive architecture, although adequate in enabling the desired result to be obtained, is inherently associated with a number of practical, operational drawbacks that put serious limitations on its use, such limitations being basically as follows:
- the fact that the mould plates reach their respective fixed reference planes A and B does not allow for even the slightest deviation in the position of the trains of preforms that are blow moulded therein. However, such preforms are applied on respective mouths that are fitting loosely in their respective supports, so that the need clearly arises for the mould plates to be provided so as to be capable of adapting to preforms that may be positioned in slightly differing manners;
- since the mould clamping force shall be such as to withstand and oppose the outward thrust, ie. the outward pushing force occurring during blow moulding of the hollow bodies due to the very high air pressure being blown ito such bodies, the moulds shall not be simply closed, but also tightly clamped together with a force amounting to approx. 1.5 times the force brought about by the overall pressure used in blow moulding said hollow bodies. Such a blow-moulding force reaches quite high values, amounting to a thrust effect of approx. 100,000 kg, and, should it be not opposed effectively, causes the moulds to open apart. Using a hydraulic control and drive means of a traditional type would require a correspondingly heavier sizing and this would in turn bring about a condition of unbalance of the forces and a resulting out-of-center condition of the alignments of the mould plates with respect to their respective reference planes A and B;
- anyway, the very high force of outward thrust which the mould plates are subject to, can easily case the same mould plates to elastically distort outwardly in their central portion, thereby jeopardizing the clamping tightness of the related mould plates and, therefore, the quality of the hollow bodies produced;
- furthermore, the possibility for the mould plates to show differences, even by a few fractions of a millimeter, in their thickness, which may be due to both normal production and assembly tolerances and said mould plates having slightly differing thicknesses owing to them referring to different hollow bodies, causes an out-of alignment condition of their contact surfaces with respect to the reference planes A and B to arise, so that they either interfere or fail to establish a desired contact with each other, whereas both such occurrences would entail serious consequences for the product or the apparatus itself.

In order to eliminate all such drawbacks, an improvement is introduced in the apparatus through the addition of as central platen 20 arranged in the middle of the space between the outer mould 1, 2 and the inner mould 3, 4 and supported by the same bedplate 5 by means of feet 21 that are capable of sliding on appropriate slide means arranged on said bedplate (Figure 9).

Said central platen is substantially parallel to the planes of the mould plates and is capable of sliding, through appropriate slide means engaging the same bedplate 5, in a direction which is parallel to the common displacement direction of the mould plates. Said central platen is provided with a sprocket wheel 21 that is journalled in a freely rotatable manner at an appropriate height on a side edge of said central platen, said sprocket wheel engaging at the two opposite vertical points two respective horizontal racks 22 and 23 which are connected to the outer mould plate 3 of the inner mould at the position 24 and to the inner mould plate 2 of the outer mould at the position 25, respectively.

Said racks have the same pitch relative to the sprocket wheel 21, while the initial arrangement of said central platen 20 and said two racks is such that the platen, ie. the journal point of the sprocket wheel 21, lies exactly halfway between the outer mould plate 3 of the inner mould and the inner mould plate 2 of the outer mould, as this is best shown in Figure 9.

Given the herein described configuration, those skilled in the art will be able to readily ascertain that said central platen, or more exactly the vertical plane extending parallelly to the moulds and passing through the journal of the sprocket wheel 21, is displaced at each instant on the plane of symmetry between the mould plate 2 and the mould plate 3 and, particularly, at the same distance from the related backplates, which eventually proves to be quite useful in the terms that will be described further on.

In fact, each movement by each one of the mould plates 2 or 3 is reported by the respective racks to the sprocket wheel 21, which, by rotating accordingly, transmits an equal displacement in the opposite direction to the driven rack which in turn displaces by a same distance, but again in the opposite direction, the driven mould plate.

Since the outer mould plate 3 is in turn connected through the tie-rod 16 to the outer mould plate 1, while the inner mould plate 2 is connected via the tie-rod 15 to the inner mould plate 4, said central platen 20, jointly with its associated organs, provides and ensures full symmetry and synchronism of movement of the mould plates of the outer mould with respect to the mould plates of the inner mould, regardless of possible commands imposed by the toggle assembly directly to the inner mould plate 4 and the drive platen 10.

Furthermore, with reference to Figure 3, the connection 15 is locked firmly in either direction with an end portion of its lodged within a respective receptacle 30 in the inner mould plate 4. In a similar manner, the connection 16 is locked firmly in either direction in the respective receptacle 31 in the outer mould plate 1. To conclude the description of the constructive configuration of the apparatus according to the present invention, in the illustration shown in Figure 9 it should be noticed that:
- the tie-rod 17 is firmly connected on one side to the outer mould plate 3, and therefore also to the outer mould plate 1 via the tie-rod 16, and on the other side to the drive platen 10;
- the end portions 32 and 33 of the tie-rods 15 and 16 opposite to the respective locking receptacles 30 and 31 are attached in a non-rigid manner to the inner mould plate 2 and outer mould plate 3, respectively, in the sense that there are provided respective Belleville springs 34 and 35 applied between said end portions 32 and 33 of the tie-rods 15 and 16 and the mould plate 2 and the mould plate 3, respectively, so that said tie-rods can be pushed elastically in such a manner that their respective end portions 32 and 33 can be forced to protrude by a short extent from the respective mould plates, but, as soon as they are released, they are capable of returning into their resting position as induced by the action of said Belleville springs.

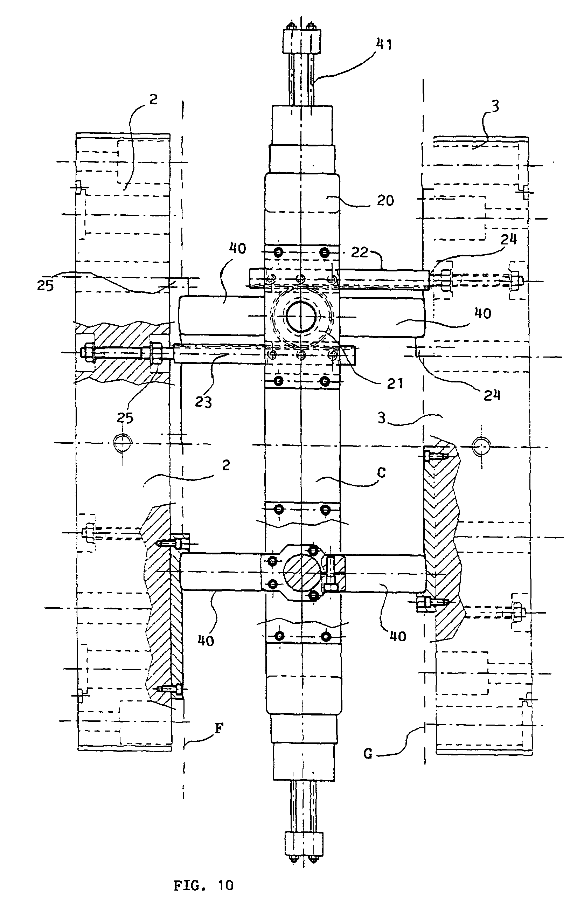

Referring now to Figure 10, which is a side view of said central platen 20, a plurality of preferably rotating, blade-like spacing elements 40 can be noticed which are mounted in appropriate recesses provided in said central platen 20. Such spacing elements are sized and arranged so as they are capable of taking two distinct end positions, preferably by their rotation about a same horizontal axis passing through saod platen 20, ie. a first position in which said spacing elements are retracted within or close to the platen 20, so as they would not touch the backplates of the adjacent mould plates 2 and 3, and therefore would not interfere therewith, and a second position in which said spacing elements 40 are extracted or rotated about the horizontal plane from opposite sides of the platen 20 so that their farthest extremities are positioned on two respective vertical planes f, g that are equidistant from the vertiocal plane C passing through the journal point of the sprocket wheel 21.

In other words, the assembly formed by the platen 20, the sprocket wheel 21, the two racks 22 and 23 (except for their different level) and the two spacing elements 40 is substantially symmetric with respect to the vertical plane passing through the journal of the sprocket wheel 21, which same plane is also exactly intermediate between the positions of the backplates of the mould plates 2 and 3.

A drive assembly 41, which is preferably of the hydraulic type, can also be noticed, which is adapted to rotatably drive said rotating spacing elements 40 by a substantially right angle; such a drive assembly can take the most varied configurations constructively for any appropriate type of operation, ie. hydraulic, electric or other, all of which are fully known in the art so that the aspect connected with the drive of said rotating spacing elements will not be delt with any further.

The operation of the so improved apparatus is as follows: in their initial position, the open moulds take a position of greatest distance from the related contact or reference planes A and B, the drive platen 10 is fully retracted since the toggle assembly is fully closed, and the two distinct trains of preforms 7 and 8 have been altready arranged in their respective positions between the corresponding mould plates (Figure 3).

In the following phase, the toggle assembly is opened and this leads to the moulds being closed. However, the initial position of the outer mould plate 3 of the inner mould is slightly displaced forward with respect to the position that it would normally have to take in order to fall in with the corresponding inner mould plate 4 exactly on the respective reference plane B, so that when said outer mould plate 3 reaches the position of the line B, the corresponding mould plate 4 is still retracted and the toggle assemly is not yet fully opened. It is in this phase that the opening motion of the spacing elements 40 starts to take place, which however do not reach their full open position yet.

As the opening phase of the toggle assembly progresses, the mould plate 3 moves beyond the plane B and reaches a more advanced position B', while the respective mould plate 4 has to reach such a position yet. In this exact position, the spacing elements 40 come to complete their maximum rotation, which is equivalent to the horizontal position leading them to wedge inon the rearsides, provided with appropriate recesses 24 and 25, respectively, of the counter mould plate 3 and the counter mould plate 2 with an orthogonal orientation with respect thereto and, therefore, with an effect of highest possible resistance to the backward thrust on the part of said mould plates.

Progressing further in its movement, the toggle assembly opens again as shown in Figure 10, and this leads to the mould plate 3 being arrested in its movement and the mould plate 4 being at the same time moved forward until it abuts against the mould plate 3 and is driven back onto the final reference plane B. The spacing elements 40 maintain the position that they have previously taken. In this phase, said psacing elements 40 come to abut against the back wall of the respective mould plates, but do not arrest their backward movement yet.

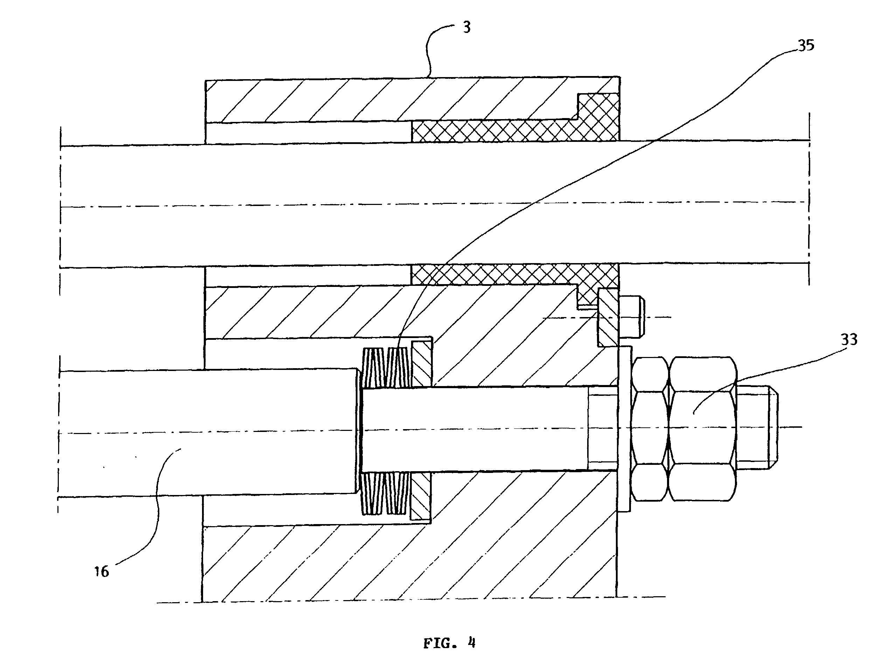

Said backward movement of the mould plate 3 is enabled by the fact that it is restrained in one direction only by the locking action of the tie-rod 16, while it can on the contrary slide limitedly in the other direction thanks to the action of the Belleville spring 35 (the mould plate 3 can move leftwards with respect to the tie-rod 16, as it can be seen in Figures 3, 4).

In the final phase, the toggle assembly reaches its fully open position, and this leads to the moulds being clamped at the highest clamping pressure, which is reached also due to the effect of the leverages making up the toggle assembly, while however maintaining the position of said mould plates 3 and 4 unaltered. This is due to the fact that the pushing action (thrust) exerted by the mould plate 4 is no longer able to cause the mould plate 3 to move back, since the backward movement thereof is immediately prevented and arrested by the presence of the spacing elements 40 which had previously been led to abut against the backplate of the mould plate 3.

It will be readily appreciated that, considering the substantial symmetry of the outer and inner moulds with respect to the median plane of the central platen 20, the sequence that has been described above with reference to the inner mould, is carried out, with the appropriate changes in the references, but in a perfectly synchronous manner, also with reference to the outer mould, so that the whole double mould arrangement is in other words driven by a single drive system, thereby reaching the aim of the present invention.

Apart from this, it can now be fully appreciated that the constantly median position of the central platen 20 with respect to the inner mould plate 2 and the outer mould plate 3 ensures that the spacing elements 40 perfectly engage the rear walls of the respective mould plates under any and each condition, thereby avoiding detrimental slack fittings and equally detrimental interferences that might make it impossible for said spacing elements 40 to carry out a full rotation.

At this point the moulds are closed and the blow moulding phase is started, which takes place normally, without any distortion or displacement of the moulds, thanks to the above described invention. As soon as the blow moulding operation is terminated, the sequence comprising the opening of the moulds and the ejection or removal of the moulded containers of thermoplastic resin is carried out in a manner that is exactly the opposite of the above described operating conditions and sequence, so that, for reasons of brevity and greater simplicity, these will not be described any further while anyway ensuring full understandability and completeness in the exposure of the teachings of the present invention and the advantages thereof.

## Claims

1. Apparatus for blow moulding hollow bodies made of plastic material, comprising:
a) two pairs of mutually coupling mould plates (1, 2; 3, 4)
b) power transmission means (46, 47), preferably at least one toggle assembly adapted to close and open said mould plates,
c) each one of said mould plates being arranged with the coupling faces parallel and capable of being displaced in a direction perpendicular to the planes of said parallel faces,
d) a plurality of cavities provided inside each pair of mould plates when the latter are closed,
e) feeding means provided to insert in each of said pairs of mould plates a respective number of preforms (7, 8),
f) a supporting structure (5) carrying said mould plates and said toggle assembly, wherein said coupling faces of the respective pairs of mould plates are fixed defining contact planes with respect to said supporting structure,
g) said number of preforms are inserted simultaneously by said feeding means in said cavities in the respective pair of mould plates (1,2; 3,4), wherein:
■ said power transmission means effects through connecting tie-rods (15, 16) the simultaneous opening and closing of a double pair of said mould plates,
■ said trains of preforms (7, 8) are inserted contemporaneously by said feeding means in the respective pair of mould plates (1,2; 3,4),
■ said power transmission means (46, 47) actuates through appropriate motion transferring means (15, 16, 17), which comprise connection tie-rods, the contemporaneous opening and closing of a double pair (1,2; 3,4) of said mould plates,
**characterized in that**
- the two pairs of mould plates (1,2;3,4) are arranged on the same side with respect to the power transmission means so that an inner mould (3,4) and an outer mould (1,2) are defined,
- the inner mould plate (4) of the inner mould is connected rigidly by means of at least a tie-rod (15) to the inner mould plate (2) of the outer mould,
- the outer mould plate (3) of the inner mould is connected rigidly by means of at least a tie-rod (16) to the outer mould plate (1) of the outer mould,
- there is provided a drive platen (10) mounted so as to be capable of sliding with a motion that is parallel to the motion of said mould plates, on said supporting structure (5) on the opposite side of said mould plates with respect to said power transmission means,
- said drive platen (10) is connected rigidly by means of at least a tie-rod (17) to the outer mould plate (3) of said inner mould,
- said power transmission means (46, 47) is connected with its extremities to the inner mould plate (4) of the inner mould and the drive platen (10), respectively, and is adapted to selectively cause said inner mould plate (4) and said platen to approach each other or move away from each other.

2. Apparatus according to claim 1, **characterized in that**
- there is provided a fixed reference point (0) on said supporting structure (5) in a position lying between the inner mould plate (4) of the inner mould and said drive platen (10),
- there is provided a synchronizing lever (12, 45) between the inner mould plate (4) of the inner mould and said fixed reference point (0),
- there is provided a synchronizing lever (11, 45) between the drive platen (10) and said fixed reference point (0),
- said two synchronizing levers are provided with a common articulated joint (45) which is journalled on an intermediate position onto said fixed reference point (0), so that said inner mould plate (4) of the inner mould and said drive platen (10) are capable of moving synchronously in opposite directions with respect to said fixed reference point (0).

3. Apparatus according to claim 2, **characterized in that** the sizing of said synchronizing levers (11, 45) (12, 45) and the location of the fixed reference point (0) of said common articulated joint (45) are defined so that, during the closing phase of said pairs of said mould plates, two mould plates that do not belong to the same mould reach and move beyond their respective contact planes (A, B) before that the respective counter mould plates reach the same respective contact planes.

4. Apparatus according to claim 3, **characterized in that**
- said at least a connecting tie-rod (15) between said inner mould plate (4) of said inner mould and said inner mould plate (2) of said outer mould is slidably connected to said inner mould plate (2) of said outer mould, and said at least a connecting tie-rod (16) between said outer mould plate (1) of said outer mould and said outer mould plate (3) of said inner mould is slidably connected to said outer mould plate (3) of said inner mould,
- said connecting tie-rods (15, 16), at the respective slidable extremities (32, 33) engaging the corresponding mould plates (2, 3), are provided with retaining elements adapted to prevent the respective mould plates from sliding out of their corresponding tie-rods,
- and at said slidable extremities (32, 33) said tie-rods and the corresponding sliding mould plates are connected by means of respective elastic means (34, 35), preferably Belleville or similar springs, adapted to bias said mould plates into returning elastically against said respective retaining means.

5. Apparatus according to claim 4, **characterized in that**
- a central platen (20) is provided between the inner mould plate (2) of the outer mould and the outer mould plate (3) of the inner mould,
- said central platen is capable of sliding on said supporting structure (5) by means of appropriate feet (21) that are adapted to enable said central platen to move parallelly with respect to the movement of said mould plates,
- said central platen is provided with a sprocket wheel (21) adapted to engage two distinct racks (22, 23) that have the same pitch as said sprocket wheel and are applied with an extremity thereof (24, 25) to said outer mould plate (3) of said inner mould and to said inner mould plate (2) of said outer mould, said elements being sized and arranged so that the displacement of any of said mould plates in any direction is transmitted in turn by said sprocket wheel and said racks to the opposite counter mould plate which is forced into moving in the opposite direction with respect to said first mould plate,
- said central platen is provided with a plurality of moving spacing elements (40), preferably rotating blades, that are capable of taking a vertical position and a horizontal position, said blades being sized and arranged so that, in their horizontal position, they arrange themselves so as to get blocked against the outer walls of both said outer mould plate of the inner mould and said inner mould plate of the outer mould, when the moulds are fully closed.

## Patentansprüche

1. Vorrichtung zum Blasformen von Hohlkörpern, die aus Kunststoffmaterial bestehen, die umfasst:
a) zwei Paare miteinander verbundener Formplatten (1, 2; 3, 4)
b) ein Kraftübertragungseinrichtung (46, 47), vorzugsweise wenigstens eine Gelenkhebelanordnung, die die Formplatten öffnet und schließt,
c) wobei jede der Formplatten so angeordnet ist, dass die Verbindungsflächen parallel sind, und sie in einer Richtung senkrecht zu den Ebenen der parallelen Flächen verschoben werden kann,
d) eine Vielzahl von Formhohlräumen, die innerhalb jedes Paars von Formplatten vorhanden sind, wenn letztere geschlossen sind,
e) Zuführeinrichtungen, die vorhanden sind, um in jedes der Paare von Formplatten eine entsprechende Anzahl von Vorformlingen (7, 8) einzuführen,
f) eine Tragestruktur (5), die die Formplatten und die Gelenkhebelanordnung trägt, wobei die Verbindungsflächen der entsprechenden Paare von Formplatten fixiert sind und Kontaktebenen in Bezug auf die Tragestruktur bilden,
g) wobei die Anzahl von Vorformlingen gleichzeitig mit den Zuführeinrichtungen in die Formhohlräume in dem entsprechenden Paar von Formplatten (1, 2; 3, 4) eingeführt werden, wobei:
die Kraftübertragungseinrichtung über verbindende Zugstangen (15, 16) das gleichzeitige Öffnen und Schließen eines Doppelpaars von Formplatten bewirkt,
die Reihen von Vorformlingen (7, 8) durch die Zuführeinrichtungen gleichzeitig in das entsprechende Paar Formplatten (1, 2; 3, 4) eingeführt werden,
die Kraftübertragungseinrichtung (46, 47) über geeignete Bewegungsübertragungseinrichtungen (15, 16, 17), die Verbindungs-Zugstangen umfassen, das gleichzeitige Öffnen und Schließen eines Doppelpaars (1, 2; 3, 4) der Formplatten bewirkt,
**dadurch gekennzeichnet, dass**:
- die zwei Paare von Formplatten (1, 2; 3, 4) auf der gleichen Seite in Bezug auf die Kraftübertragungseinrichtung angeordnet sind, so dass eine innere Form (3, 4) und eine äußere Form (1, 2) ausgebildet werden,
- die innere Formplatte (4) der inneren Form mittels wenigstens einer Zugstange (15) starr mit der inneren Formplatte (2) der äußeren Form verbunden ist,
- die äußere Formplatte (3) der inneren Form mittels wenigstens einer Zugstange (16) starr mit der äußeren Formplatte (1) der äußeren Form verbunden ist,
- eine Mitnehmerplatte (10) vorhanden ist, die so angebracht ist, dass sie mit einer Bewegung, die parallel zur Bewegung der Formplatten ist, auf der Tragestruktur (5) an der in Bezug auf die Kraftübertragungseinrichtung gegenüberliegenden Seite der Formplatten gleiten kann,
- wobei die Mitnehmerplatte (10) mittels wenigstens einer Zugstange (17) starr mit der äußeren Formplatte (3) der inneren Form verbunden ist,
- die Kraftübertragungseinrichtung (46, 47) an ihren äußeren Enden mit der inneren Formplatte (4) der inneren Form bzw. der Mitnehmerplatte (10) verbunden ist und wahlweise bewirkt, dass sich die innere Formplatte (4) und die Platte einander nähern und sich voneinander wegbewegen.

2. Vorrichtung nach Anspruch 1, **dadurch gekennzeichnet, dass**:
- ein fester Bezugspunkt (0) an der Tragestruktur (5) an einer Position vorhanden ist, die zwischen der inneren Formplatte (4) der inneren Form und der Mitnehmerplatte (10) liegt,
- ein Synchronisierhebel (12, 45) zwischen der inneren Formplatte (4) der inneren Form und dem festen Bezugspunkt (0) vorhanden ist,
- ein Synchronisierhebel (11, 45) zwischen der Mitnehmerplatte (10) und dem festen Bezugspunkt (0) vorhanden ist,
- die zwei Synchronisierhebel mit einer gemeinsamen Gelenkverbindung (45) versehen sind, die an einer Zwischenposition an dem festen Bezugspunkt (0) gelagert ist, so dass die innere Formplatte (4) der inneren Form und die Mitnehmerplatte (10) sich synchron in einander entgegengesetzten Richtungen in Bezug auf den festen Bezugspunkt (10) bewegen können.

3. Vorrichtung nach Anspruch 2, **dadurch gekennzeichnet, dass** die Maße der Synchronisierhebel (11, 45) (12, 45) und die Position des festen Bezugspunktes (0) der gemeinsamen Gelenkverbindung (45) so ausgeführt sind, dass während der Schließphase des Paars von Formplatten zwei Formplatten, die nicht zur gleichen Form gehören, ihre entsprechenden Kontaktebenen (A, B) erreichen und sich über sie hinausbewegen, bevor die entsprechenden Gegen-Formplatten die gleichen entsprechenden Kontaktebenen erreichen.

4. Vorrichtung nach Anspruch 3, **dadurch gekennzeichnet, dass**:
- die wenigstens eine verbindende Zugstange (15) zwischen der inneren Formplatte (4) der inneren Form und der inneren Formplatte (2) der äußeren Form verschiebbar mit der inneren Formplatte (2) der äußeren Form verbunden ist und die wenigstens eine verbindende Zugstange (16) zwischen der äußeren Formplatte (1) der äußeren Form und der äußeren Formplatte (3) der inneren Form verschiebbar mit der äußeren Formplatte (3) der inneren Form verbunden ist,
- die verbindenden Zugstangen (15) an den entsprechenden verschiebbaren äußeren Enden (32, 33), die mit den entsprechenden Formplatten (2, 3) in Eingriff sind, mit Halteelementen versehen sind, die verhindern, dass die entsprechenden Formplatten aus ihren entsprechenden Zugstangen herausgleiten,
- und an den verschiebbaren äußeren Enden (32, 33) die Zugstangen und die entsprechenden gleitenden Formplatten mittels entsprechender elastischer Einrichtungen (34, 35), vorzugsweise mit Teller- oder ähnlichen Federn verbunden sind, die die Formplatten so spannen, dass sie elastisch an die entsprechenden Halteeinrichtungen zurückkehren.

5. Vorrichtung nach Anspruch 4, **dadurch gekennzeichnet, dass**:
- eine Mittelplatte (20) zwischen der inneren Formplatte (2) der äußeren Form und der äußeren Formplatte (3) der inneren Form vorhanden ist,
- die Mittelplatte auf der Tragestruktur (5) mittels entsprechender Füße (21) gleiten kann, die es ermöglichen, dass sich die Mittelplatte parallel in Bezug auf die Bewegung der Formplatten bewegt,
- die Mittelplatte mit einem Zahnrad (21) versehen ist, das mit zwei separaten Zahnstangen (22, 23) in Eingriff kommt, die die gleiche Teilung aufweisen wie das Zahnrad und die mit einem äußeren Ende derselben (24, 25) an der äußeren Formplatte (3) der inneren Form und an der inneren Formplatte (2) der äußeren Form angebracht sind, wobei die Elemente so bemessen und angeordnet sind, dass die Verschiebung einer beliebigen der Formplatten in jeder beliebigen Richtung ihrerseits durch das Zahnrad und die Zahnstangen auf die gegenüberliegende Gegen-Formplatte übertragen wird, die dazu gezwungen wird, sich in der in Bezug auf die erste Formplatte entgegengesetzten Richtung zu bewegen,
- die Mittelplatte mit einer Vielzahl von sich bewegenden Abstandshalterelementen (40), vorzugsweise sich drehenden Flügeln, versehen ist, die eine vertikale Position und eine horizontale Position einnehmen können, wobei die Flügel so bemessen und angeordnet sind, dass sie in ihrer horizontalen Position so angeordnet sind, dass sie an den Außenwänden sowohl der äußeren Formplatte der inneren Form als auch der inneren Formplatte der äußeren Form blockieren, wenn die Formen vollständig geschlossen sind.

## Revendications

1. Appareil destiné à mouler par soufflage des corps creux fabriqués dans une matière plastique, comprenant :
a) deux paires de plaques de moule (1, 2 ; 3, 4) en accouplement mutuel ;
b) des moyens de transmission de puissance (46, 47), de préférence au moins un ensemble de basculement adapté pour fermer et ouvrir lesdites plaques de moule ;
c) chacune desdites plaques de moule étant aménagée avec des faces d'accouplement parallèles et capable d'être déplacée dans une direction perpendiculaire aux plans desdites faces parallèles ;
d) une pluralité de cavités aménagées à l'intérieur de chaque paire de plaques de moule lorsque ces dernières sont fermées ;
e) des moyens d'alimentation destinés à introduire dans chacune desdites paires de plaques de moule un nombre respectif de préformes (7, 8) ;
f) une structure de support (5) supportant lesdites plaques de moule et ledit ensemble de basculement, dans laquelle lesdites faces d'accouplement des paires respectives de plaques de moule sont fixes pour définir des plans de contact par rapport à ladite structure de support ;
g) ledit nombre de préformes est introduit de manière simultanée par lesdits moyens d'alimentation dans lesdites cavités dans la paire respective de plaques de moule (1, 2 ; 3, 4), dans lesquelles :
* lesdits moyens de transmission de puissance effectuent simultanément l'ouverture et la fermeture d'une double paire desdites plaques de moules par l'intermédiaire de biellettes de connexion (15, 16) ;
* lesdits trains de préformes (7, 8) sont introduits dans le même temps par lesdits moyens d'alimentation dans la paire respective de plaques de moule (1, 2 ; 3, 4) ;
* lesdits moyens de transmission de puissance (46, 47) actionnent par l'intermédiaire de moyens de transfert de mouvement appropriés (15, 16, 17), qui comprennent des biellettes de connexion, l'ouverture et la fermeture dans le même temps d'une double paire (1, 2 ; 3, 4) desdites plaques de moule;
**caractérisé en ce que** :
- les deux paires de plaques de moule (1, 2 ; 3, 4) sont aménagées du même côté par rapport aux moyens de transmission de puissance, de sorte qu'un moule interne (3, 4) et un moule externe sont définis ;
- la plaque de moule interne (4) du moule interne est connectée de manière fixe au moyen d'au moins une biellette (15) à la plaque de moule interne (2) du moule externe ;
- la plaque de moule externe (3) du moule interne est connectée de manière fixe au moyen d'au moins une biellette (16) à la plaque de moule externe (1) du moule externe ;
- il est fourni un plateau de commande (10) monté de manière à pouvoir coulisser dans un déplacement qui est parallèle au déplacement desdites plaques de moule, sur ladite structure de support (5) du côté opposé desdites plaques de moule par rapport aux dits moyens de transmission de puissance ;
- ledit plateau de commande (10) est connecté de manière fixe au moyen d'au moins une biellette (17) à la plaque de moule externe (3) dudit moule interne ;
- lesdits moyens de transmission de puissance (46, 47) sont connectés à leurs extrémités respectivement à la plaque de moule interne (4) du moule interne et au plateau de commande (10), et sont adaptés pour provoquer de manière sélective le rapprochement l'une de l'autre ou l'éloignement l'une de l'autre de ladite plaque de moule interne (4) et dudit plateau (10).

2. Appareil selon la revendication 1, **caractérisé en ce que** :
- il est fourni un point de référence fixe (0) sur ladite structure de support (5) dans une position se situant entre la plaque de moule interne (4) du moule interne et ledit plateau de commande (10) ;
- il est fourni un levier de synchronisation (12, 45) entre la plaque de moule interne (4) du moule interne et ledit point de référence fixe (0) ;
- il est fourni un levier de synchronisation (11, 45) entre le plateau de commande (10) et ledit point de référence fixe (0) ;
- lesdits deux leviers de synchronisation comportent une connexion articulée commune (45) qui est supportée en rotation à une position intermédiaire sur ledit point de référence fixe (0), de sorte que ladite plaque de moule interne (4) du moule interne et ledit plateau de commande (10) sont capables de se déplacer en synchronisation dans des directions opposées par rapport au dit point de référence fixe (0).

3. Appareil selon la revendication 2, **caractérisé en ce que** le la mise à dimension desdits leviers de synchronisation (11, 45) (12, 45) et le positionnement du point de référence fixe (0) de ladite connexion articulée commune (45) sont définis de telle sorte que, au cours de la phase de fermeture desdites paires desdites plaques de moule, deux plaques de moule qui n'appartiennent pas au même moule atteignent leurs plans de contact respectifs (A, B) et se déplacent au delà de ceux-ci avant que les contreplaques de moule respectives atteignent les mêmes plans de contact respectifs.

4. Appareil selon la revendication 3, **caractérisé en ce que** :
- ladite au moins une biellette de connexion (15) entre ladite plaque de moule interne (4) dudit moule interne et ladite plaque de moule interne (2) dudit moule externe est connectée en coulissement à ladite plaque de moule interne (2) dudit moule externe, et ladite au moins une biellette de connexion (16) entre ladite plaque de moule externe (1) dudit moule externe et ladite plaque de moule externe (3) dudit moule interne est connectée en coulissement à ladite plaque de moule externe (3) dudit moule interne ;
- lesdites biellettes de connexion (15, 16), aux extrémités en coulissement respectives (32, 33) en engagement avec les plaques de moule correspondantes (2, 3), comportent des éléments de retenue adaptés pour empêcher que les plaques de moule respectives glissent hors de leurs biellettes correspondantes ;
- et aux dites extrémités en coulissement (32, 33) lesdites biellettes et les plaques de moule en coulissement correspondantes sont connectées à l'aide de moyens élastiques respectifs (34, 35), de préférence des ressorts Belleville ou similaire, adaptés pour. décentrer lesdites plaques de moule dans un retour élastique contre lesdits moyens dé retenue respectifs.

5. Appareil selon la revendication 4, **caractérisé en ce que** :
- un plateau central (20) est disposé entre la plaque de moule interne (2) du moule externe et la plaque de moule externe (3) du moule interne ;
- ledit plateau central est capable de coulisser sur ladite structure de support (5) au moyen de sabots appropriés (21) qui sont adaptés pour permettre un déplacement dudit plateau central de manière parallèle au déplacement desdites plaques de moule ;
- ledit plateau central comporte une roue dentée (21) adaptée pour s'engager avec deux crémaillères distinctes (22, 23) qui ont le même pas que ladite roue dentée et qui sont appliquées à une extrémité de celles-ci (24, 25) à ladite plaque de moule externe (3) dudit moule interne et à ladite plaque de moule interne (2) dudit moule externe, lesdits éléments étant dimensionnés et aménagés de sorte que le déplacement de l'une quelconque de l'une desdites plaques de moule, dans quelque direction que ce soit, est transmis à son tour par ladite roue dentée et par lesdites crémaillères à la contreplaque de moule opposée qui est poussée en déplacement dans la direction opposée par rapport à ladite première plaque de moule ;
- ledit plateau central comporte une pluralité d'éléments de séparation mobiles (40), de préférence des lames rotatives, qui sont capables d'adopter une position verticale et une position horizontale, lesdites lames étant dimensionnées et aménagées de telle sorte que, dans leur position horizontale, elles sont aménagées d'elles-mêmes de manière à se bloquer contre les parois externes à la fois de ladite plaque de moule externe du moule interne et de ladite plaque de moule interne du moule externe, lorsque les moules sont dans une position de fermeture complète.
